# FASCICULE DE BREVET EUROPEEN

(11) **EP 0 709 318 B1**
(45) Date de publication et mention de la délivrance du brevet: **30.09.1998**
(21) Numéro de dépôt: 95402395.8
(22) Date de dépôt: 25.10.1995
(51) Int. Cl.: B65G 53/24, G07D 9/00, G07F 9/06

(54) **Procédé de transfert pneumatique et de recueil de pieces de monnaie en vrac et dispositif pour la mise en oeuvre du procédé**
Verfahren zur pneumatischen Übertragung und Auffangung von Münzen als Schüttgut und Einrichtung zur Durchführung des Verfahrens
Method for pneumatic transfer and collection of coins as bulk material, and device for performing the method

(30) Priorité: 25.10.1994 FR 9412740
(43) Date de publication de la demande: 01.05.1996
(73) Titulaire: SOCIETE DE FILTRATION TRAITEMENT SECHAGE ET TOUTES APPLICATIONS - F.T.S.A., F-95430 Butry-sur-Oise (FR)
(72) Inventeur: Martenet, Pierre, Cabinet Ballot Schmit, F-75116 Paris (FR)
(74) Mandataire: Schmit, Christian Norbert Marie

(56) Documents cités:
- FR-A- 2 639 336
- US-A- 4 131 318

## Description

L'invention se rapporte au transport pneumatique de pièces de monnaie en vrac ou de produits ou matériaux analogues et concerne un procédé de transport et de recueil desdites pièces de monnaie dans des coffres de récupération, ainsi qu'un dispositif permettant la mise en oeuvre du procédé.

Il existe des installations de transfert pneumatique de pièces de monnaie qui fonctionnent en aspiration ou en pression et dont la ligne d'acheminement aboutit à un cyclone dans lequel tombent les pièces. Pour extraire celles-ci, il est habituel de prévoir à la partie basse, deux clapets étanches successifs qui délimitent un sas et qui assurent l'étanchéité entre l'atmosphère et le circuit de transfert. A la sortie du sas les pièces tombent dans un ou plusieurs paniers de récupération.

Dans ces installations du type de celle décrite dans le document FR-A-2 639 336, les pièces recueillies par exemple à un poste de péage d'autoroute, sont évacuées au fur et à mesure de leur dépose par un tube pneumatique et, de ce fait, la pompe d'aspiration créant une dépression dans la ligne, fonctionne en continu. Les clapets, qui ferment le sas par lequel les pièces sont évacuées vers le conteneur de récupération, sont actionnés par des vérins pneumatiques et, consécutivement à l'arrivée saccadée des pièces, il est nécessaire de manoeuvrer les vérins à des fréquences élevées. Pour cela, il faut disposer, bien sûr, d'un compresseur à marche permanente, ainsi que des automatismes de commande associés. Cela conduit à des installations dont la qualité de fonctionnement n'est pas en cause mais dont la mise en oeuvre est lourde et coûteuse. En outre, l'usure des clapets, due à leur cycle rapide d'ouverture et de fermeture, impose des remplacements fréquents.

Enfin, dans les stations courantes de péages qui disposent de plusieurs postes de réception de pièces, et donc de plusieurs lignes de transfert, le fonctionnement en continu des ventilateurs nécessite une puissance installée non négligeable.

Pour pallier à ces inconvénients, le Demandeur a mis au point un nouveau procédé de fonctionnement du transfert pneumatique de matériaux en vrac, en particulier pièces de monnaie, qui met à profit la possibilité de stocker au départ de la ligne, une certaine quantité de pièces accumulées dans un réservoir avant de les libérer dans le tube pneumatique. Aussi, le procédé repose-t-il sur un fonctionnement discontinu et cyclique du ventilateur d'aspiration, et sur un système d'aiguillage et/ou de coffres de récupération grâce auxquels des "trains" de pièces venant du réservoir de départ sont cycliquement distribués aux postes de réception. Un tel procédé permet d'éviter le montage de vérins pneumatiques et des automatismes de commande qui les accompagnent, et de permettre une réalisation plus économique de l'installation.

Aussi, un premier objet de la présente invention consiste en un procédé de transfert pneumatique de matériaux en vrac, en particulier pièces de monnaie, utilisant un ventilateur d'aspiration agissant sur un cyclone pour assurer l'aspiration desdits matériaux et leur déplacement vers un coffre de recueil, par l'intermédiaire d'un tube de transport pneumatique, procédé qui consiste à faire fonctionner cycliquement le ventilateur de manière à ce que :
- dans un temps de fonctionnement du ventilateur, un lot de matériaux accumulés dans un réservoir tampon de départ est transféré le long du tube de transport, jusqu'au cyclone, puis dans une zone de stockage rendue sensiblement étanche à l'air extérieur par la fermeture étanche de clapets ; et
- dans un temps d'arrêt du ventilateur, lesdits clapets sont ouverts.

Un autre objet de la présente invention concerne dispositif de transport pneumatique de matériaux en vrac comprenant :
- un ventilateur d'aspiration ;
- un cyclone relié au ventilateur ;
- un tube pour le transport pneumatique des matériaux d'un poste de réception desdits matériaux, au cyclone dans lequel ledit tube débouche ;
- une zone de stockage des matériaux transportés en communication directe avec une base du cyclone et munie d'un ou plusieurs clapets ; caractérisé en ce qu'il comporte des moyens de commande pour faire fonctionner le ventilateur cycliquement, des moyens pour fermer les clapets pendant le temps de fonctionnent du ventilateur pour rendre la zone de stockage sensiblement étanche à l'air extérieur pendant le temps de fonctionnement du ventilateur et des moyens pour transférer un lot de matériaux accumulés dans un réservoir tampon de départ le long d'un tube de transport pendant ce temps de fonctionnement.

D'autres caractéristiques et avantages de l'invention ressortiront de la description qui va suivre d'exemples non limitatifs de réalisation dans lesquels il est fait référence aux dessins annexés, qui représentent :
- Figure 1 : une vue schématique en élévation d'une installation de transfert pneumatique de pièces de monnaie ; et
- Figures 2 et 3 : des vues de variantes de réalisation du poste de réception.

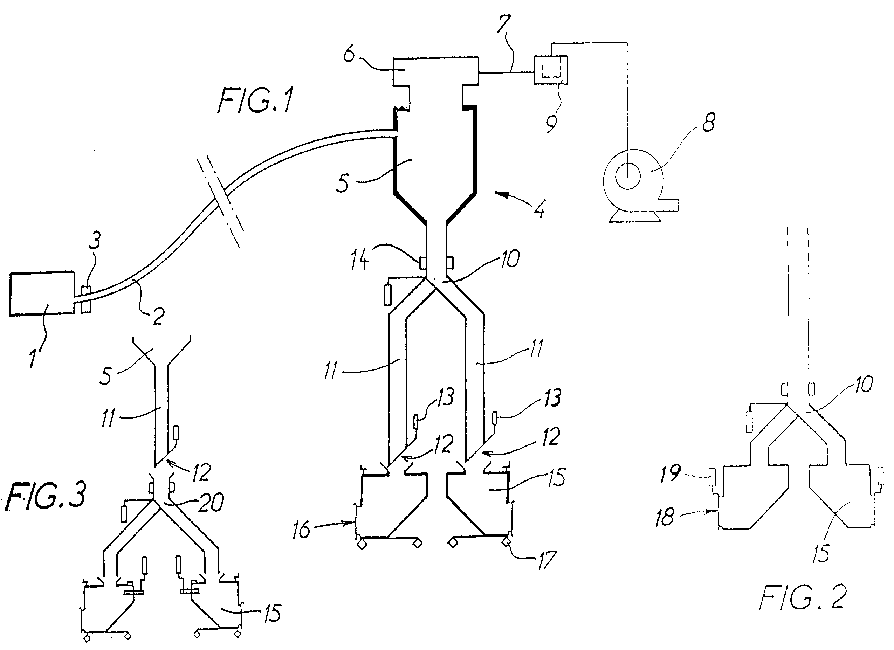

La figure 1 illustre schématiquement une ligne de transfert pneumatique de pièces de monnaie parmi plusieurs lignes montées en parallèle.

Au niveau de la réception de la monnaie, par exemple à un poste de péage, les pièces sont recueillies dans un réservoir tampon 1 qui communique avec un tube de transport pneumatique 2, un détecteur 3 étant prévu au départ.

L'arrivée du tube 2 au poste de réception 4 débouche en partie haute d'au moins un cyclone 5 surmonté d'une tête de cyclone ou tête de vortex 6 montée à la partie supérieure du cyclone 5, et reliée, par un conduit 7, à un ventilateur d'aspiration 8 du type ventilateur annulaire. Un filtre 9 est en outre intercalé dans le conduit 7. Le cyclone 5 est une enceinte cylindrique dont la base est en communication directe avec un aiguillage étanche 10 permettant de distribuer les pièces vers l'un ou l'autre des deux tubes de stockage verticaux 11. Ces derniers sont obturés, à leurs extrémités inférieures, par des clapets étanches 12 manoeuvrés, dans un exemple, par des vérins électriques 13. Dans un autre exemple, les clapets 12 sont des clapets battants. Ils ne sont alors pas manoeuvrés par des vérins électriques ou pneumatiques ou autres moyens actifs équivalents, mais se referment naturellement et de façon étanche, lorsqu'une dépression est provoquée dans l'un des tubes 11, par la mise en fonctionnement du ventilateur 8. En effet, cette dépression provoque une aspiration de l'air des tubes 11 suffisante pour que les clapets 12 se referment et soient maintenus refermés. Lorsque le ventilateur 8 est arrêté, la pression de l'air contenu dans les tubes 11 augmente jusqu'à la pression atmosphérique et les clapets 12 s'ouvrent alors naturellement. Dans la présente description, on entend par clapet ouvert, un clapet non refermé de manière étanche par des moyens actifs ou par une dépression provoquée par le fonctionnement du ventilateur. Eventuellement, une masselotte formant contre-poids judicieusement placée à une extrémité des clapets 12 facilitera les transitions entre les états fermé et ouvert desdits clapets 12.

Par ailleurs, un détecteur 14 est avantageusement installé à la base du cyclone 5. Sous les tubes de stockage 11 sont placés des coffres de récupération 15 munis de portillons d'accès 16. Dans le cas représenté à la figure 1, les coffres 15 sont montés sur des roulettes 17.

Le dispositif fonctionne de la façon suivante :

Au fur et à mesure du passage des usagers au poste de péage, les pièces, introduites dans des bornes de péages par lesdits usagers, sont conduites dans le réservoir tampon 1 où elles s'accumulent. Le ventilateur 8 ne fonctionne pas et il n'y a aucune aspiration d'air dans le tube 2. Les clapets 12 restent ouverts, c'est-à-dire, ainsi que cela a été défini précédemment, non refermés de façon étanche par des moyens actifs tels que les vérins 13 ou par la dépression provoquée par le ventilateur 8.

Au bout d'un temps prédéterminé ou lorsque le réservoir tampon 1 est plein ou comporte un nombre donné de pièces de monnaie, par exemple 1200 environ, et pendant une durée ou un temps limité également prédéterminée, le ventilateur 8 est mis en marche. Le ventilateur ne fonctionne que pendant une durée limitée et qu'après un temps d'arrêt supérieur à sa durée précédente de fonctionnement. Ainsi, à titre d'exemple, on indique que le ventilateur ne fonctionne que durant 7 minutes, par heure. Le temps d'arrêt est donc bien supérieur au temps de fonctionnement. Simultanément, les vérins 13 ont fermé les clapets 12 de façon étanche, et l'aiguillage 10 est positionné vers des tubes 11. Le lot de pièces du réservoir 1 est alors libéré par un mécanisme non représenté et les pièces vont en cascade être transférées jusqu'au cyclone 5 d'où, par gravité, elles iront s'accumuler au-dessus du clapet dans un des tubes de stockage 11. L'existence d'une tête de cyclone 6 montée à la partie supérieure du cyclone 5, permet d'augmenter le débit et d'améliorer la séparation de l'air et des produits solides - autres que les pièces - qui pourraient être entraînés dans le tube, par exemple des poussières, déchets ou limailles, ce qui augmente très sensiblement la durée de vie du filtre 9. De toute façon, les produits précités sont arrêtés par le filtre 9 et ne peuvent atteindre le ventilateur 8.

Quand le cycle de fonctionnement du ventilateur est terminé, les clapets 12 sont libérés par l'arrêt du ventilateur 8 et la montée en pression qui en résulte, et les pièces se vident cycliquement et tombent dans le coffre 15 correspondant d'où elles peuvent être extraites à la convenance de l'utilisateur, lesdits coffres 15 n'étant pas nécessairement étanches. Le réservoir 1 est alors en position d'accueil d'une nouvelle série de pièces du poste de péage. On notera qu'à cette étape du procédé de l'invention, le poids des pièces sur les clapets 12 facilite leur ouverture.

Dès que le ventilateur 8 est arrêté et que le transfert est donc interrompu dans cette ligne, il est avantageux de mettre en action une ligne voisine. Ainsi, pour une puissance électrique installée modeste, on peut assurer le fonctionnement cyclique d'une série de ventilateurs.

Grâce à ce procédé, on réalise donc une économie notable en énergie mais aussi en matériel puisque de simples clapets battants ou tout au plus, des clapets commandés par de simples vérins électriques sont suffisants. La sollicitation des clapets étant en outre beaucoup moins fréquente qu'avec les systèmes connus, ils s'usent beaucoup moins vite et nécessitent moins de réglage.

La figure 2 illustre une variante de réalisation dans laquelle l'étanchéité est réalisée, non plus au niveau des clapets mais aux niveaux des coffres 15 de récupération eux-mêmes. Ils sont alors équipés de portes étanches 18 éventuellement manoeuvrées par des vérins 19. On notera cependant que les portes étanches 18 sont avantageusement des clapets battants refermés de manière étanche par la mise en fonctionnement du ventilateur. En amont, on retrouve, un aiguillage étanche 10. Dans cette installation, les coffres sont fixes.

Le fonctionnement est identique à celui précédemment décrit sauf par le fait que les pièces tombent directement dans le coffre étanche.

Bien entendu, le vidage des coffres 15 est assuré de façon avantageuse, selon le trafic et la quantité de pièces recueillies.

Dans une autre variante de réalisation illustrée à la figure 3, le cyclone 5 est en communication directe avec un seul tube de stockage 11, d'une certaine longueur fermé à sa base par un clapet étanche 12. En sortie du tube, les produits sont repris par un aiguillage non étanche 20 qui les distribue vers l'un ou l'autre des coffres de récupération 15.

L'invention ne se limite pas à l'exemple préférentiel de réalisation précédemment décrit pour le transfert de monnaie, et pourrait s'appliquer au transfert d'autres objets ou produits analogues de petites dimensions.

## Revendications

1. Procédé de transfert pneumatique de matériaux en vrac utilisant un ventilateur d'aspiration (8) agissant sur un cyclone (5) pour assurer l'aspiration desdits matériaux et leur déplacement vers un coffre de recueil (15) par l'intermédiaire d'un tube de transport pneumatique (2), caractérisé en ce qu'il consiste à faire fonctionner cycliquement le ventilateur (8) de manière que :
- dans un temps de fonctionnement du ventilateur (8), un lot de matériaux accumulés dans un réservoir tampon de départ (1) est transféré le long du tube de transport (2), jusqu'au cyclone (5, 6) puis dans une zone de stockage (11, 15) rendue sensiblement étanche à l'air extérieur par la fermeture étanche de clapets (12, 18); et
- dans un temps d'arrêt du ventilateur (8), lesdits clapets (12, 18) sont ouverts.

2. Procédé selon la revendication 1, caractérisé en ce que le ventilateur (8) fonctionne pendant un temps de fonctionnement limité et après un temps d'arrêt supérieur à son temps de fonctionnement.

3. Dispositif de transport pneumatique de matériaux en vrac comprenant :
- un ventilateur (8) d'aspiration ;
- un cyclone (5) relié au ventilateur (8) ;
- un tube (2) pour le transport pneumatique des matériaux d'un poste (4) de réception desdits matériaux, au cyclone (5) dans lequel ledit tube (2) débouche ;
- une zone de stockage (11, 15) des matériaux transportés en communication directe avec une base du cyclone (5) et munie d'un ou plusieurs clapets (12, 18) ;
caractérisé en ce qu'il comporte des moyens de commande pour faire fonctionner le ventilateur (8) cycliquement, des moyens pour fermer les clapets (12, 18) pendant le temps de fonctionnent du ventilateur pour rendre la zone de stockage (11, 15) sensiblement étanche à l'air extérieur pendant le temps de fonctionnement du ventilateur (8), et des moyens pour transférer un lot de matériaux accumulés dans un réservoir tampon de départ (1) le long d'un tube de transport (2) pendant ce temps de fonctionnement.

4. Dispositif selon la revendication 3, caractérisé en ce que les clapets (12, 18) sont des clapets battants refermés de manière étanche lorsqu'une dépression est provoquée dans la zone de stockage (11, 15), par la mise en fonctionnement du ventilateur (8).

5. Dispositif selon l'une des revendications 3 ou 4, caractérisé en ce qu'au moins un aiguillage étanche (10) à deux voies distribue les pièces issues du cyclone (5) vers l'une ou l'autre de deux zones de stockage (11, 15) fermées de façon étanche.

6. Dispositif selon l'une des revendications 3, 4 et 5, caractérisé en ce que les zones de stockage sont constituées de tubes verticaux (11) fermés par des clapets étanches (12), placés au-dessus de coffres de récupération (15).

7. Dispositif selon les revendications 3, 4 ou 5, caractérisé en ce que les zones de stockage sont constituées des coffres de récupération (15) eux-mêmes, qui sont équipés de portes étanches (18).

8. Dispositif selon l'une des revendications 3 et 5, caractérisé en ce que les clapets étanches (12) sont manoeuvrés par des vérins électriques (13).

9. Dispositif selon la revendication 7, caractérisé en ce que les portes étanches (18) sont manoeuvrées par des vérins électriques (19).

10. Dispositif selon l'une des revendications 3 à 8, caractérisé en ce que le ventilateur d'aspiration (8) est relié par un conduit (7) à une tête de cyclone (6) surmontant le cyclone (5).

## Claims

1. Method for the pneumatic transfer of loose bulk materials by the use of an exhauster (8) which acts upon a cyclone (5) to exhaust said materials and carry them to a collecting box (15) via a pneumatic conveying tube (2), characterised in that said method consists in operating the exhauster (8) cyclically such that:
- during a period in which the exhauster (8) is running, a batch of materials which has accumulated in a starting buffer reservoir (1) is transferred along the conveying tube (2) as far as the cyclone (5, 6), then into a storage zone (11, 15) which has been made substantially impervious to the outside air by the impervious closure of valves (12, 18); and
- during a period in which the exhauster (8) is stopped, said valves (12, 18) are opened.

2. Method according to claim 1, characterised in that the exhauster (8) runs for a limited operating period and after a stoppage period longer than its operating period.

3. Device for pneumatically conveying loose bulk materials, comprising:
- an exhauster (8);
- a cyclone (5) connected to the exhauster (8);
- a tube (2) for pneumatically conveying the materials from a receiving station (4) for said materials to the cyclone (5) into which said tube (2) emerges;
- a storage zone (11, 15) for the conveyed materials which communicates directly with a base of the cyclone (5) and is equipped with one or more valves (12, 18);
characterised in that it has control means for operating the exhauster (8) cyclically, means for closing the valves (12, 18) during the operating period of the exhauster in order to make the storage zone (11, 15) substantially impervious to the outside air during the operating period of the exhauster (8), and means for transferring a batch of accumulated materials in a starting buffer reservoir (1) along a conveying tube (2) during said operating period.

4. Device according to claim 3, characterised in that the valves (12, 18) are swing-type valves which are closed imperviously whenever a partial vacuum is produced in the storage zone (11, 15) by switching on the exhauster (8).

5. Device according to either of claims 3 or 4, characterized in that at least one two-way switch (10) distributes the items coming from the cyclone (5) to one or other of two imperviously sealed storage zones (11,15).

6. Device according to any of claims 3, 4 and 5, characterized in that the storage zones are constituted by vertical tubes (11) sealed by impervious valves (12), positioned above collection boxes (15).

7. Device according to claims 3, 4 or 5, characterised in that the storage zones are constituted by the collection boxes (15) themselves, which are fitted with impervious doors (18).

8. Device according to either of claims 3 and 5, characterised in that the impervious valves (12) are operated by electric actuators (13).

9. Device according to claim 7, characterised in that the impervious doors (18) are operated by electric actuators (19).

10. Device according to any of claims 3 to 8, characterised in that the exhauster (8) is linked by a conduit (7) to a cyclone head (6) on top of the cyclone (5).

## Patentansprüche

1. Verfahren zur pneumatischen Überführung von Schüttgut unter Benutzung eines Sauglüfters (8), der auf einen Zyklon (5) einwirkt, um die Ansaugung des Gutes und seine Verlagerung in einen Aufnahmekasten (15) mittels eines pneumatischen Förderrohres (2) sicherzustellen, dadurch gekennzeichnet, daß es darin besteht, den Lüfter (8) auf eine solche Weise zyklisch arbeiten zu lassen, daß:
- in einer Betriebszeit des Lüfters (8) eine Menge an Gut, das sich in einem Ausgangs-Pufferspeicher (1) angesammelt hat, längs des Förderrohres (2) bis zum Zyklon (5, 6) und dann in eine Verwahrungszone (11, 15) überführt wird, die durch das dichte Schließen von Ventilklappen (12, 18) gegenüber der Aussenluft im wesentlichen dicht ist; und
- die genannten Ventilklappen (12, 18) in einer Standzeit des Lüfters (8) offen sind.

2. Verfahren nach Anspruch 1, dadurch gekennzeichnet, daß der Lüfter (8) während einer begrenzten Betriebszeit und nach einer Standzeit arbeitet, die länger ist als seine Betriebszeit.

3. Pneumatische Fördervorrichtung für Schüttgut, mit;
- einem Sauglüfter (8);
- einem Zyklon (5), der mit dem Lüfter (8) verbunden ist;
- einem Rohr (2) für die pneumatische Förderung des Gutes von einer Aufnahmestation (4) für das genannte Gut zum Zyklon (5), in den das genannte Rohr (2) einmündet; und
- einer Verwahrungszone (12, 15) für das geförderte Gut, die in unmittelbarer Verbindung mit einer Unterseite des Zyklons (5) steht und mit einer oder mehreren Ventilklappen (12, 18) versehen ist;
dadurch gekennzeichnet, daß sie Steuermittel aufweist, um den Lüfter (8) zyklisch arbeiten zu lassen, Mittel zum Schliessen der Ventilklappen (12, 18) während der Betriebszeit des Lüfters, um die Verwahrungszone (11, 15) gegenüber während der Betriebszeit des Lüfters (8) gegenüber der Außenluft im wesentlichen abzudichten, und Mittel zum Überführen einer Menge an Gut, das sich in einem Ausgangs-Pufferspeicher (1) angesammelt hat, längs eines Förderrohres (2) während dieser Betriebszeit,

4. Vorrichtung nach Anspruch 3, dadurch gekennzeichnet, daß die Ventilklappen (12, 18) selbstschließende Ventilklappen sind, die wieder dicht geschlossen sind, wenn ein Unterdruck in der Verwahrungszone (11, 15) durch die Betriebsaufnahme des Lüfters (8) hervorgerufen ist.

5. Vorrichtung nach einem der Ansprüche 3 oder 4, dadurch gekennzeichnet, daß mindestens eine dichte Verzweigung (10) mit zwei Kanälen die Stücke, die vom Zyklon (5) entstammen, auf die eine oder die andere zweier Verwahrungszonen (11, 15) aufteilt, die dicht geschlossen sind.

6. Vorrichtung nach einem der Ansprüche 3, 4 und 5, dadurch gekennzeichnet, daß die Verwahrungszonen von vertikalen Rohren (11) gebildet sind, die durch dichte Ventilklappen (12) geschlossen sind und über Rückgewinnungskästen (15) angeordnet sind.

7. Vorrichtung nach den Ansprüchen 3, 4 oder 5, dadurch gekennzeichnet, daß die Verwahrungszonen von Wiedergewinnungskästen (15) selbst gebildet sind, die mit dichten Türen (18) ausgestattet sind.

8. Vorrichtung nach einem der Ansprüche 3 und 5, dadurch gekennzeichnet, daß die dichten Ventilklappen (12) durch elektrische Stellglieder (19) betätigt sind.

9. Vorrichtung nach Anspruch 7, dadurch gekennzeichnet, daß die dichten Türen (18) durch elektrische Stellglieder (19) betätigt sind.

10. Vorrichtung nach einem der Ansprüche 3 bis 8, dadurch gekennzeichnet, daß der Sauglüfter (8) durch eine Leitung (7) mit einem Zyklonkopf (6) verbunden ist, der über dem Zyklon (5) angebracht ist.
